# EUROPÄISCHE PATENTSCHRIFT

(11) **EP 0 602 505 B1**
(45) Veröffentlichungstag und Bekanntmachung des Hinweises auf die Patenterteilung: **21.04.1999**
(21) Anmeldenummer: 93119683.6
(22) Anmeldetag: 07.12.1993
(51) Int. Cl.: A61L 2/10

(54) **Vorrichtung zum Behandeln schadstoffbelasteter Flüssigkeiten mittels UV-Strahlung**
Apparatus for treating polluant containing liquids with UV radiation
Appareil pour le traitement de liquides chargés de polluants par rayonnement UV

(30) Priorität: 18.12.1992 DE 9217378 U
(43) Veröffentlichungstag der Anmeldung: 22.06.1994
(73) Patentinhaber: R&M Kühllagerbau GmbH, 80992 München (DE)
(72) Erfinder: Fricke, Martin, D-99091 Erfurt (DE)
(74) Vertreter: Rau, Manfred, Dr. Dipl.-Ing.

(56) Entgegenhaltungen:
- EP-A- 0 315 583
- DE-A- 2 205 598
- DE-A- 4 138 916

## Beschreibung

Die Erfindung bezieht sich auf eine Vorrichtung zum Behandeln schadstoffbelasteter Flüssigkeiten mittels UV-Strahlung nach dem Oberbegriff des Anspruchs 1.

Eine solche Vorrichtung ist beispielsweise aus der DE-A1-41 38 916 bekannt. Bei dieser Vorrichtung ist der UV-Strahler wendelförmig ausgebildet. Der die Flüssigkeit aufnehmende rohrförmige Körper erstreckt sich durch den Strahler hindurch, so daß die äußere Mantelfläche des rohrförmigen Körpers in weiten Bereichen von dem UV-Strahler umgeben ist. Die bekannte Vorrichtung dient zum Behandeln schadstoffbelasteter Flüssigkeiten mittels UV-Strahlung und von dieser gebildetem Ozon, wobei der UV-Strahler zum einen dazu verwendet wird, in einem fluiden Oxidationsmittel Ozon zu erzeugen, und zum anderen dazu verwendet wird, die mit dem so ozonierten Oxidationsmittel durchmischte Flüssigkeit einer UV-Behandlung auszusetzen. Die bekannte Vorrichtung ist insofern nachteilig, als aufgrund der komplizierten Form des UV-Strahlers mit erhöhten Fertigungs- und damit Herstellungskosten zu rechnen ist.

Gemaß DE 22 05 598 A ist eine Vorrichtung zum Entkeimen von Flüssigkeiten bekannt. Hierbei sind entlang der Längsrichtung zweier konzentrischer Rohre UV-Röhren vorgesehen die die Rohre umgeben. Jede UV-Röhre ist an ihren beiden entgegengesetzten Enden gelagert so daß für einen Wechsel der UV-Röhren beide Lagerungen gelöst werden müssen. Bei dieser Vorrichtung sind deshalb doppelt so viele Anschlüsse wie UV-Röhren erforderlich. Darüber hinaus ist ein einfacher Wechsel entlang der Langsrichtung der Rohre nicht möglich da die Halterungen die Röhren in beide Richtungen der Längsrichtung der Rohre halten. Ein Wechsel der UV-Röhren ist deshalb kostenaufwendig und kann lediglich von Fachleuten durchgeführt werden.

Der Erfindung liegt die Aufgabe zugrunde, eine Vorrichtung der eingangs erwähnten Art zu schaffen, deren UV-Strahler wirtschaftlicher hergestellt und in die Vorrichtung eingebaut werden kann.

Diese Aufgabe wird erfindungsgemäß durch eine Vorrichtung mit den Merkmalen des Anspruchs 1 gelöst.

Die einzelnen U-förmigen Stäbe des UV-Strahlers sind in hohen Stückzahlen und damit kostengünstig herstellbar. Es ist ferner möglich, mehrere Stäbe hintereinander anzuordnen, so daß der erfindungsgemäße UV-Strahler ohne weiteres an die Länge des rohrförmigen Körpers anpaßbar und damit auch für eine Modulbauweise der Vorrichtung geeignet ist. Die elektrischen Anschlüsse des erfindungsgemäßen UV-Strahlers sind nur geringfügig voneinander beabstandet, so daß bei entsprechender Isolierung dieselben Gehäuse-Durchtritts-Öffnungen für die elektrischen Leitungen verwendet werden können. Dadurch sind die Herstellungs- und Montagekosten für den UV-Strahler deutlich vermindert.

Gemäß einer bevorzugten Weiterbildung der Erfindung ist der UV-Strahler ein Niederdruckstrahler, insbesondere ein Quecksilberamalgam-Strahler, der vorzugsweise mittels der Indium-Amalgam-Technik in Abhängigkeit von der im Bereich des Strahlers herrschenden Temperatur auf den jeweils optimalen Quecksilber-Gasdruck einstellbar ist. Ein solcher Strahler bleibt auch unter den in der Vorrichtung herrschenden Betriebsbedingungen, insbesondere den dort sich entwickelnden Temperaturen, ein Niederdruckstrahler, dessen Emissionsmaximum bei einer gewünschten Quecksilber-Emission von 253,7 nm liegt. Dadurch ist der Wirkungsgrad des Strahlers deutlich verbessert.

Günstig ist ferner, daß der UV-Strahler 3-18, vorzugsweise 8, U-förmige Stäbe aufweist, die mit geringem Abstand von dem rohrförmigen Körper außerhalb desselben angeordnet sind, wobei die durch beide Schenkel jedes U-förmigen Stabes verlaufende Stab-Längsebene vorzugsweise etwa tangential zur Mantelfläche des rohrförmigen Körpers ausgerichtet ist. Dadurch ist eine gleichmäßige und intensive Bestrahlung der zu behandelnden Flüssigkeit bei geringen Herstellungskosten gewährleistet. Damit ist es auch bei der erfindungsgemäßen Vorrichtung möglich, die Flüssigkeit von allen Seiten einer hohen Strahlungsdosis auszusetzen.

Vorteilhafterweise ist jeder Stab mit seinem die elektrischen Anschlüsse tragenden einen Ende an einem den rohrförmigen Körper beabstandet umgebenden ersten Ringkörper gehalten. Ein solcher Ringkörper ist kostengünstig herstellbar und ohne weiteres beispielsweise an einem rohrförmigen Gehäuse befestigbar.

Gemäß einer anderen Weiterbildung der Erfindung ist jeder Stab mit seinem den U-förmigen Bogen bildenden anderen Ende in eine vorzugsweise in Form eines Langlochs ausgebildete Durchtrittsöffnung eines zweiten Ringkörpers einsteckbar, der den rohrförmigen Körper beabstandet umgibt. Auch der zweite Ringkörper ist ohne großen Aufwand herstellbar; die Befestigung jedes U-förmigen Stabes erfolgt auf einfache Weise lediglich durch ein Hindurchstecken des U-förmig gebogenen anderen Ende jedes Stabes durch die Durchtrittsöffnung des Ringkörpers. Die Montage des UV-Strahlers kann somit auch von ungelerntem Personal durchgeführt werden. Auch der zweite Ringkörper ist ohne großen Aufwand beispielsweise am Gehäuse der Vorrichtung anbringbar.

Gemäß einer anderen Weiterbildung hat der rohrförmige Körper eine vertikale Längsachse und ist das die elektrischen Anschlüsse tragende eine Ende jedes Stabes am oberen Ende des rohrförmigen Körpers und das andere Ende des Stabes am unteren Ende des rohrförmigen Körpers angeordnet. Durch eine derart ausgebildete Vorrichtung ist insbesondere der Aufwand beim Bestücken der Vorrichtung, vor allem aber bei einem Austauschen einzelner U-förmiger Stäbe des Strahlers, minimiert, da beispielsweise defekte Stäbe nach einem Lösen des oberen Gehäusedeckels ohne weiteres ausgetauscht werden können. Dabei ist nicht erforderlich, die im rohrförmigen Körper sich befindende zu behandelnde Flüssigkeit aus der Vorrichtung abzulassen. Bereits nach kurzer Zeit ist die Vorrichtung somit wieder betriebsbereit; Wartungs- und Reparaturarbeiten erfordern somit nur geringe Standzeiten der Vorrichtung. Damit sind auch die Betriebskosten der erfindungsgemäßen Vorrichtung im Vergleich zu einer herkömmlichen Vorrichtung vermindert.

Vorteilhafterweise besteht der erste Ringkörper aus Metall und der zweite Ringkörper aus Kunststoff, insbesondere Teflon^{R}. Derartige Ringkörper weisen auf der einen Seite eine ausreichend hohe Festigkeit, auf der anderen Seite eine gute Korrosionsbeständigkeit auf.

Ein Ausführungsbeispiel des Erfindungsgegenstandes wird nachfolgend anhand der Zeichnung näher erläutert. Es zeigen:
- Fig. 1: eine schematische, teilweise geschnittene Seitenansicht einer Vorrichtung zum Behandeln schadstoffbelasteter Flüssigkeiten;
- Fig. 2: einen Schnitt entlang der Linie II-II in Fig. 1 unter teilweiser Weglassung einiger Teile der Vorrichtung; und
- Fig. 3: eine schematische Vorderansicht eines in der Vorrichtung verwendeten UV-Strahlers.

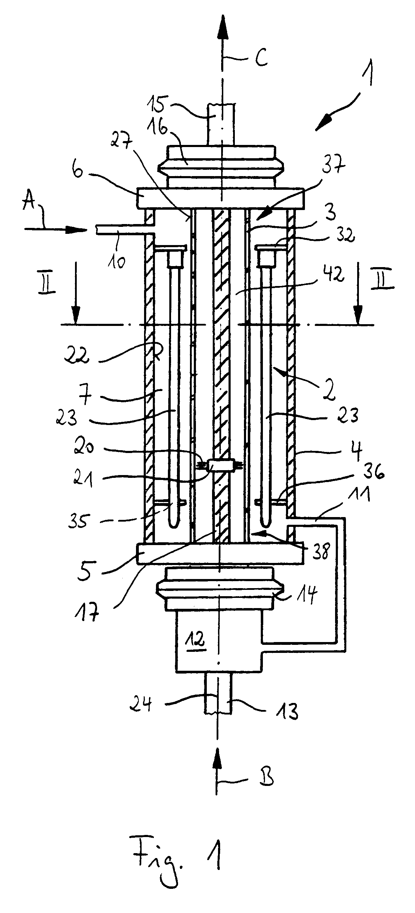

In Fig. 1 ist eine Vorrichtung 1 zum Behandeln schadstoffbelasteter Flüssigkeiten mittels UV-Strahlung schematisch, teilweise im Schnitt, in einer Seitenansicht dargestellt. Die Vorrichtung 1 dient insbesondere dazu, mit Hilfe eines UV-Strahlers 2 ein fluides Oxidationsmittel einer Ozonierung zu unterziehen, das derart ozonierte Oxidationsmittel mit der zu behandelnden Flüssigkeit zu vermischen, das Gemisch aus Oxidationsmittel und Flüssigkeit in einen rohrförmigen Körper 3 einzuleiten und darin einer UV-Bestrahlung durch den UV-Strahler 2 auszusetzen.

Die Vorrichtung 1 umfaßt ein rohrförmiges Gehäuse 4 mit einem daran vorzugsweise lösbar befestigbaren Boden 5 und einem Deckel 6.

Wie in Fig. 1 dargestellt, ist der rohrförmige Körper 3 zentrisch im Gehäuse 4 angeordnet. Der UV-Strahler 2 erstreckt sich innerhalb des ringförmigen Bereichs 7 zwischen dem rohrförmigen Körper 3 und dem Gehäuse 4.

Am oberen Abschnitt des Gehäuses 4 ist eine Eintrittsleitung 10 für das fluide, d.h. flüssige oder gasförmige Oxidationsmittel vorgesehen. Am unteren Abschnitt des Gehäuses 4 ist eine Abzugsleitung 11 für das Oxidationsmittel angebracht, die strömungstechnisch mit einer Mischkammer 12 verbunden ist. Am unteren Ende der Mischkammer 12 ist eine Zuleitung 13 für die zu behandelnde Flüssigkeit befestigt. Die Mischerkammer 12 ist mittels eines Flansches 14 am Boden 5 des Gehäuses 4 derart gehalten, daß das Gemisch aus Oxidationsmittel und Flüssigkeit in den rohrförmigen Körper 3 einströmen kann.

Eine Auslaßleitung 15 für die gereinigte Flüssigkeit, gegebenenfalls einschließlich Resten an Oxidationsmittel, ist mittels eines weiteren Flansches 16 mit dem Deckel 6 des Gehäuses 4 verbunden.

Innerhalb des ringförmigen Körpers 3 ist zentrisch ein Innenreflektor 17 angebracht, der von dem Oxidationsmittel/Flüssigkeits-Gemisch nicht durchströmt wird, wie der rohrförmige Körper 3 und das Gehäuse 4 ebenfalls zwischen dem Boden 5 und dem Deckel 6 gehalten ist und im Sinne einer Doppelwirkung auch als Führung für eine mit Borsten 20 versehen Ringspaltbürste 21 dient. Die Ringspaltbürste ist entlang dem Innenreflektor 17 auf- und abbewegbar, wobei die Borsten 20 entlang der zylindrischen Innenwand des vorzugsweise aus Quarzglas bestehenden ringförmigen Körpers 3 entlanggleiten, um eventuelle Schmutzreste von der Wand abzulösen. Die abgelösten Schmutzreste werden vorzugsweise mit der Flüssigkeit über die Auslaßleitung 15 abgeführt. Der Innenreflektor 17 besteht vorzugsweise aus poliertem, korrosionsbeständigem Stahl. Außerdem kann die gesamte Innenwand 22 des Gehäuses 4 eine die UV-Strahlung reflektierende Oberfläche haben.

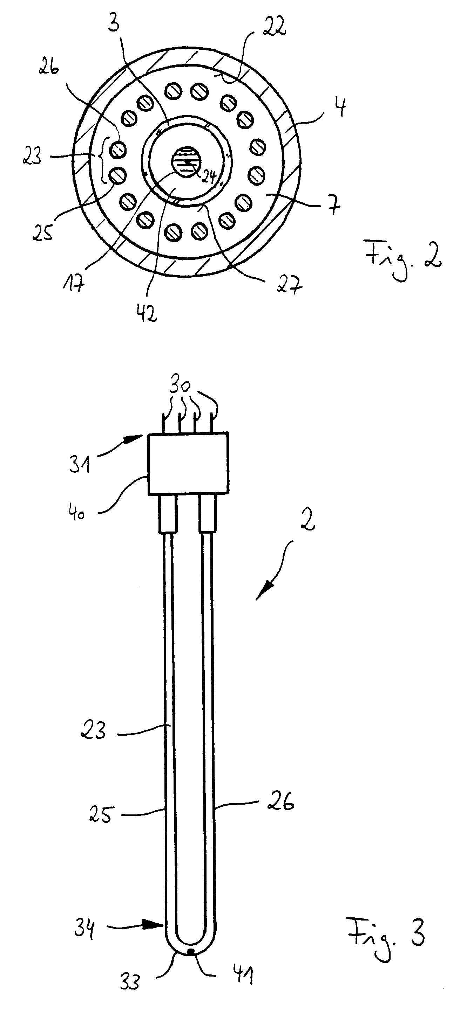

Erfindungsgemäß ist der UV-Strahler 2 in Form mehrerer U-förmiger Stäbe 23 ausgebildet. Gemäß Fig. 2 sind in dem dargestellten Ausführungsbeispiel acht U-förmige Stäbe 23 vorgesehen. Die Stäbe 23 erstrecken sich parallel zur Längsachse 24 des rohrförmigen Körpers 3 und sind gleichmäßig um die Mantelfläche des rohrförmigen Körpers 3 herum verteilt angeordnet.

Der UV-Strahler 2 ist ein Niederdruckstrahler, vorzugsweise ein Quecksilberamalgam-Strahler, der mittels der Indium-Amalgam-Technik in Abhängigkeit von der im Bereich des Strahlers herrschenden Temperatur auf den jeweils optimalen Quecksilber-Gasdruck einstellbar ist.

Die in Fig. 2 gezeigte Anzahl der U-förmigen Stäbe 23 ist in Abhängigkeit von den Abmessungen der Vorrichtung und den darin herrschenden Betriebszuständen sowie Reaktionsbedingungen in weiten Grenzen variierbar. Vorzugsweise sind drei bis achtzehn U-förmige Stäbe in dem ringförmigen Bereich 7 zwischen dem rohrförmigen Körper 3 und dem Gehäuse 4, also außerhalb der Flüssigkeit, angeordnet.

Gemäß den Fig. 1 und 2 ist die durch beide Schenkel 25, 26 jedes U-förmigen Stabes 23 verlaufende Stab-Längsebene etwa tangential zur Mantelfläche 27 des rohrförmigen Körpers 3 ausgerichtet.

Gemäß Fig. 1 ist jeder Stab mit seinem die elektrischen Anschlüsse 30 tragenden einen Ende 31 an einem ersten Ringkörper 32 gehalten. Der Ringkörper 32 ist an der Innenwand 22 des Gehäuses 4 befestigt und derart ausgebildet, daß sich der rohrförmige Körper 3 unter Belassung eines Abstandes durch den Ringkörper 32 hindurch erstrecken kann. Außerdem ist jeder Stab 23 mit seinem den U-förmigen Bogen 33 bildenden anderen Ende 34 in eine Durchtrittsöffnung 35 eines zweiten Ringkörpers 36 einsteckbar. Die Druchtrittsöffnung 35 ist vorzugsweise als Langloch ausgebildet (nicht gezeigt). Auch der zweite Ringkörper 36 ist an der Innenwand 22 des Gehäuses 4 befestigt und umgibt den rohrförmigen Körper 3 unter Belassung eines Abstandes.

Fig. 1 verdeutlicht ferner, daß die Längsachse 24 des rohrförmigen Körpers 3 vertikal ausgerichtet ist und daß das eine Ende 31 jedes Stabes 23 am oberen Ende 37 des rohrförmigen Körpers 3 und das andere Ende 34 jedes Stabes am unteren Ende 38 des rohrförmigen Körpers 3 angeordnet ist.

Der erste Ringkörper 32 besteht vorzugsweise aus Metall, der zweite Ringkörper aus Kunststoff, insbesondere Teflon^{R}.

Die in den Figuren dargestellten Größenverhältnisse sind lediglich beispielhaft ausgewählt. So ist es insbesondere möglich, die in Fig. 2 übermäßig stark gewählte Wandstärke des Gehäuses 4 dünner auszubilden. Der UV-Strahler 2 hat eine die Anschlüsse 30 und die Schenkel 25, 26 jedes Stabs 23 aufnehmende Strahler-Fassung 40. Gemäß Fig. 3 befindet sich die Indium-Perle 41 am unteren Totpunkt des den U-förmigen Bogen 33 bildenden anderen Endes 34 jedes Stabs.

Nachfolgend wird die Funktion der zuvor beschriebenen Vorrichtung beispielhaft erläutert.

Das fluide Oxidationsmittel wird entlang dem Pfeil A über die Eintrittsleitung 10 in den ringförmigen Bereich 7 zwischen rohrförmigem Körper 3 und Gehäuse 4 eingeleitet und dort mit Hilfe der UV-Strahler 2 ozoniert. Das Ozon enthaltende Oxidationsmittel wird über die Abzugsleitung 11 aus dem ringförmgien Bereich 7 abgeführt und in die Mischkammer 12 eingeleitet, wo es mit gemäß Pfeil B über die Zuleitung 13 in die Mischkammer 12 eingeleiteter Flüssigkeit durchmischt wird. Das Gemisch aus Ozon enthaltendem Oxidationsmittel und Flüssigkeit durchströmt nach Verlassen der Mischkammer 12 den Flansch 14, den Boden 5 des Gehäuses 4 und anschließend den sich zwischen dem Innenreflektor 17 und dem rohrförmigen Körper 3 erstreckenden Ringraum 42. Die Ringspaltbürste 21 kann derart ausgebildet sein, daß diese mit der zu behandelnden Flüssigkeit nach oben bewegt wird.

Die zu behandelnde Flüssigkeit wird im Ringraum 42 einer UV-Behandlung durch die Strahler 2 unterworfen. Dabei laufen die bereits bekannten chemischen bzw. physikalischen Prozesse ab, so daß die gereinigte Flüssigkeit nachfolgend über den weiteren Flansch 16 und die Auslaßleitung 15 entlang dem Pfeil C aus der Vorrichtung 1 abgezogen werden kann.

Die Erfindung ermöglicht ein wirtschaftliches Herstellen und Betreiben der zuvor beschriebenen Vorrichtung.

## Patentansprüche

1. Vorrichtung zum Behandeln schadstoffbelasteter Flüssigkeiten mittels UV-Strahlung, mit
a) einem die Flüssigkeit aufnehmenden rohrförmigen Körper (3) und
b) einem auf die Flüssigkeit einwirkenden UV-Strahler (2), der mehrere Stäbe (23) aufweist, die
i) sich im wesentlichen parallel zur Längsachse (24) des rohrförmigen Körpers (3) erstrecken,
ii) gleichmäßig um die Mantelfläche (27) des rohrförmigen Körpers (3) herum verteilt angeordnet sind und
iii) zum Betrieb mit elektrischen Anschlüssen (30) versehen sind, **dadurch gekennzeichnet, daß**
c) jeder Stab (23) U-förmig ausgebildet ist und
d) mit seinen beiden Schenkeln (25, 26) in einer Strahler-Fassung (40) gehalten ist, die die elektrischen Anschlüsse (30) trägt.

2. Vorrichtung nach Anspruch 1,
dadurch **gekennzeichnet,** daß
der UV-Strahler (2) ein Niederdruckstrahler, vorzugsweise ein Quecksilberamalgam-Strahler,ist.

3. Vorrichtung nach Anspruch 2,
dadurch **gekennzeichnet,** daß
der UV-Strahler (2) mittels der Indium-Amalgam-Technik in Abhängigkeit von der im Bereich des Strahlers herrschenden Temperatur auf den jeweils optimalen Quecksilber-Gasdruck einstellbar ist.

4. Vorrichtung nach einem der vorhergehenden Ansprüche,
dadurch **gekennzeichnet,** daß
der UV-Strahler (2) drei bis achtzehn, vorzugsweise acht, U-förmige Stäbe (23) aufweist, die mit geringem Abstand von dem rohrförmigen Körper (3) außerhalb desselben angeordnet sind.

5. Vorrichtung nach einem der vorhergehenden Ansprüche,
dadurch **gekennzeichnet,** daß
die durch beide Schenkel (25, 26) jedes U-förmigen Stabes (23) verlaufende Stab-Längsebene etwa tangential zur Mantelfläche (27) des rohrförmigen Körpers (3) ausgerichtet ist.

6. Vorrichtung nach einem der vorhergehenden Ansprüche,
dadurch **gekennzeichnet,** daß
jeder Stab (23) mit seinem die elektrischen Anschlüsse (30) tragenden einen Ende (31) an einem den rohrförmigen Körper (3) beabstandet umgebenden ersten Ringkörper (32) gehalten ist.

7. Vorrichtung nach einem der vorhergehenden Ansprüche,
dadurch **gekennzeichnet,** daß
jeder Stab (23) mit seinem den U-förmigen Bogen (33) bildenden anderen Ende (34) in eine vorzugsweise in Form eines Langlochs ausgebildete Durchtrittsöffnung (35) eines zweiten Ringkörpers (36) einsteckbar ist, der den rohrförmigen Körper (3) beabstandet umgibt.

8. Vorrichtung nach einem der vorhergehenden Ansprüche,
dadurch **gekennzeichnet,** daß
der rohrförmige Körper (3) eine vertikale Längsachse (24) hat und das die elektrischen Anschlüsse (30) tragende eine Ende (31) jedes Stabes (23) am oberen Ende (37) des rohrförmigen Körpers (3) und das andere Ende (34) jedes Stabes (23) am unteren Ende (38) des rohrförmigen Körpers (3) angeordnet ist.

9. Vorrichtung zumindest nach den Ansprüchen 6 und 7,
dadurch **gekennzeichnet,** daß
der erste Ringkörper (32) aus Metall und der zweite Ringkörper (36) aus Kunststoff, vorzugsweise Teflon^{R}, besteht.

## Claims

1. Apparatus for treating pollutant containing liquids with UV radiation, comprising
a) a tubular body (3) holding the liquids, and
b) an ultraviolet lamp (2) acting on the liquid and having several rods (23), which
i) are substantially parallel to the longitudinal axis (24) of the tubular body (3),
ii) are distributed regularly around the surface area (27) of the tubular body (3), and
iii) are provided with electric terminals (30) for operation,
**characterized in that**
c) each rod (23) is U-shaped, and
d) is held by its two legs (25, 26) in a lamp holder (40) which carries the electric terminals (30).

2. Apparatus according to claim 1,
**characterized in that** the ultraviolet lamp (2) is a low-pressure lamp, preferably a mercury amalgam lamp.

3. Apparatus according to claim 2,
**characterized in that** the ultraviolet lamp (2) is adjustable to the in each case optimal mercury gas pressure by means of the indium amalgam technique in dependence on the temperature prevailing in the vicinity of the lamp.

4. Apparatus according to one of the preceding claims,
**characterized in that** the ultraviolet lamp (2) comprises three to eighteen, preferably eight, U-shaped rods (23) which are disposed outside the tubular body (3) at a small distance therefrom.

5. Apparatus according to one of the preceding claims,
**characterized in that** the longitudinal plane which extends through both legs (25, 26) of each U-shaped rod (23) is approximately tangential to the surface area (27) of the tubular body (3).

6. Apparatus according to one of the preceding claims,
**characterized in that** each rod (23), by its end (31) carrying the electric terminals (30), is held on a first annular body (32) surrounding the tubular body (3) at a distance.

7. Apparatus according to one of the preceding claims, **characterized in that** each rod (23), by its other end forming the U-shaped
bow (33), is insertable in a through hole (35), preferably designed as an oblong hole, of a second annular body (36) which surrounds the tubular body (3) at a distance.

8. Apparatus according to one of the preceding claims,
**characterized in that** the tubular body (3) has a vertical longitudinal axis (24) and in that the end (31) of each rod (23) which carries the electric terminals (30) is disposed at the upper end (37) of the tubular body (3) and in that the other end (34) of each rod (23) is disposed at the lower end (38) of the tubular body (3).

9. Apparatus at least according to claims 6 and 7,
**characterized in that** the first annular body (32) consists of metal and the second annular body (36) of plastic material, preferably Teflon^{R}.

## Revendications

1. Dispositif pour traiter des liquides chargés de substances nocives à l'aide d'un rayonnement ultraviolet, comprenant
a) un corps de forme tubulaire (3) logeant le liquide, et
b) un émetteur de rayonnement ultraviolet (2), qui agit sur le liquide et comporte plusieurs barreaux (23), qui
(i) s'étendent essentiellement parallèlement à l'axe longitudinal (24) du corps de forme tubulaire (3),
(ii) sont disposés en étant répartis uniformément autour de la surface enveloppe (27) du corps de forme tubulaire (3),
(iii) sont pourvus, pour le fonctionnement, de bornes électriques (30),
caractérisé en ce que
c) chaque barreau (23) est agencé en forme de U, et
d) est retenu par ses deux branches (25, 26) dans une monture (40) de l'émetteur, qui porte les bornes électriques (30).

2. Dispositif selon la revendication 1, caractérisé en ce que l'émetteur de rayonnement ultraviolet (2) est un émetteur basse pression, de préférence un émetteur à amalgame de mercure.

3. Dispositif selon la revendication 2, caractérisé en ce que l'émetteur de rayonnement ultraviolet (2) est réglable au moyen de la technique de l'amalgame d'indium, sur la pression de gaz du mercure respectivement optimale, en fonction de la température régnant au voisinage de l'émetteur.

4. Dispositif selon l'une des revendications précédentes, caractérisé en ce que l'émetteur de rayonnement ultraviolet (2) comprend trois à dix-huit, de préférence huit, barreaux (23) en forme de U, qui sont disposés à une faible distance du corps de forme tubulaire (3) à l'extérieur de ce dernier.

5. Dispositif selon l'une des revendications précédentes, caractérisé en ce que le plan longitudinal d'un barreau, qui passe par les deux branches (25, 26) de chaque barreau (23) en forme de U, et sont orientés approximativement tangentiellement à la surface enveloppe (27) du corps de forme tubulaire (3).

6. Dispositif selon l'une des revendications précédentes, caractérisé en ce que chaque barreau (23) est retenu par l'une de ses extrémités (31), qui porte les bornes électriques (30), sur un premier corps annulaire (32) qui entoure, tout en en étant distant, le corps de forme tubulaire (3).

7. Dispositif selon l'une des revendications précédentes, caractérisé en ce que chaque barreau (23) peut être enfiché, par son autre extrémité (34) formant le coude en forme de U (33), dans une ouverture de passage (35), qui est agencée de préférence sous la forme d'un trou allongé, d'un second corps annulaire (36), qui entoure à distance le corps de forme tubulaire (3).

8. Dispositif selon l'une des revendications précédentes, caractérisé en ce que le corps de forme tubulaire (3) possède un axe longitudinal vertical (24) et que l'extrémité (31) de chaque barreau (23), qui porte les bornes électriques (30), est disposé sur l'extrémité supérieure (37) du corps de forme tubulaire (3), et que l'autre extrémité (34) de chaque barreau (23) est disposée sur l'extrémité inférieure (38) du corps de forme tubulaire (3).

9. Dispositif selon au moins les revendications 6 et 7, caractérisé en ce que le premier corps annulaire (32) est formé d'un métal et le second corps annulaire (38) est formé d'une matière plastique et de préférence du Teflon®.
